# EUROPEAN PATENT SPECIFICATION

(11) **EP 1 206 736 B1**
(45) Date of publication and mention of the grant of the patent: **12.01.2005**
(21) Application number: 00954128.5
(22) Date of filing: 18.08.2000
(51) Int. Cl.: G06F 3/023

(54) **KEYBOARD LAYOUT AND METHOD FOR DATA ENTRY**
TASTATURSCHEMA UND METHODE ZUR DATENEINGABE
AGENCEMENT DE CLAVIER ET PROCEDE D'ENTREE DE DONNEES

(30) Priority: 18.08.1999 US 149552 P
(43) Date of publication of application: 22.05.2002
(73) Proprietor: Thomson Licensing S.A., 92648 Boulogne Cedex (FR)
(72) Inventor: LIEBHOLD, Valerie, Sacrez, Carmel, IN 29631 (US)
(74) Representative: Rossmanith, Manfred, Dr.
(86) International application number: PCT/US2000/022655
(87) International publication number: WO 2001/013210

(56) References cited:
- EP-A- 0 858 023
- WO-A-99/46563
- DE-C- 345 365
- FR-A- 924 048
- US-A- 4 444 520

## Description

### Field of the Invention

The present invention relates to data entry and, more particularly, to a keyboard and an associated system and method of data entry.

### Background of the Invention

Many electronic devices require input from a user. In some instances, such input is in the form of simple yes/no or on/off functions that may be accomplished via switches and/or buttons. In other instances, such input may be more complex requiring the use of an input device having various alpha-numeric characters and/or other symbols.

In the latter case, a physical keyboard is typically utilized as the input device in order to allow the user the ability to input data in various forms. Keyboards, or a form thereof, are utilized for data entry in a myriad of devices, including computers, ATMs, kiosks, toys, and the like.

In addition to physical keyboards as data entry devices, a display may depict a data entry screen. The data entry screen may depict choices in a menu structure or may provide alpha-numeric keys. That is, the data entry screen may be a visual representation of a keyboard (i.e., a virtual keyboard). Data entry may be accomplished via a touch-screen in conjunction with the display or via a movable cursor or highlighter. Other means of data entry may be used as well.

In all of the above cases, the data inputted is processed or used by the device in one manner or another. In one case, the input of data may allow for personalization of a consumer electronics product, such as through applications associated with the consumer electronic product. As with any data entry system, the ease and rapidity of data entry is of great importance.

One drawback with all of the above data entry systems or devices, is the time it takes to navigate from one character/symbol or key to another. This is especially true of input devices that utilize a cursor, highlighted device and/or the like typically in conjunction with an on-screen display. When the cursor is placed on a key, it may take time for the cursor to move from the chosen key to the next key. With non-alphabetical keyboards, extensive training may be required to remember where each key is located.

It has been recognized by the present inventor, however, that if the distance between keys of the data input device can be minimized, the time spent to perform data entry can be reduced.

US 4444520 discloses a data entry device wherein the keys are arranged in a compact pattern. An x-y coordinate system can be applied in diagonal. However not all keys then have an integer coordinate.

The international application WO 99/46563, which is prior art pursuant to Article 54(3) and 54(4) EPC, discloses a data entry device for a graphical user interface of a navigation system. The graphical user interface includes a display having several groups of keys with each group arranged in a unique predetermined direction relative to a start position. A user manipulatable directional input device permits a user to select any one of the groups with a single key stroke. Once a group has been selected, the directional input device permits a user to activate any one of the symbols within a group with a single stroke. Selection of a key then re-activates the start position.

A method of data entry is also known from EP 0858023. There is no reference key at an origin of the x-y coordinate system.

### Summary of the Invention

In one form, the present invention is a data entry device having a plurality of user selectable keys wherein the keys are arranged about a central point or key such that each key is at an integer minimum distance from the central point or key relative to each other key. Each key represents a character and/or symbol. In the case of an alphabet, the keys representing the characters of the alphabet may be arranged alphabetically.

In another form, the present invention provides a method for data entry wherein an integer distance between input keys or choices of an input device is minimized by providing a central reference point wherein a selection medium returns to the reference point after each input/key selection.

### Brief Description of the Drawings

Reference to the following description of the present invention should be taken in conjunction with the accompanying drawings, wherein:
Fig. 1 is a diagrammatic representation of an exemplary electronic device operable to utilize the present data entry configuration and method of data entry in accordance with the principles of the present invention;
Fig. 2 is a representation of an embodiment of a data entry configuration in accordance with the principles of the present invention;
Fig. 3 is a representation of a second embodiment of a data entry configuration in accordance with the principles of the present invention;
Fig. 4 is a representation of a third embodiment of a data entry configuration in accordance with the principles of the present invention;
Fig. 5 is a representation of a fourth embodiment of a data entry configuration in accordance with the principles of the present invention;
Fig. 6 is a representation of a fifth embodiment of a data entry configuration in accordance with the principles of the present invention;
Fig. 7 is a representation of a sixth embodiment of a data entry configuration in accordance with the principles of the present invention; and
Fig. 8 is a flowchart of a method of data entry in accordance with the principles of the present invention.

Corresponding reference characters indicate corresponding parts throughout the several views.

### Detailed Description of the Invention

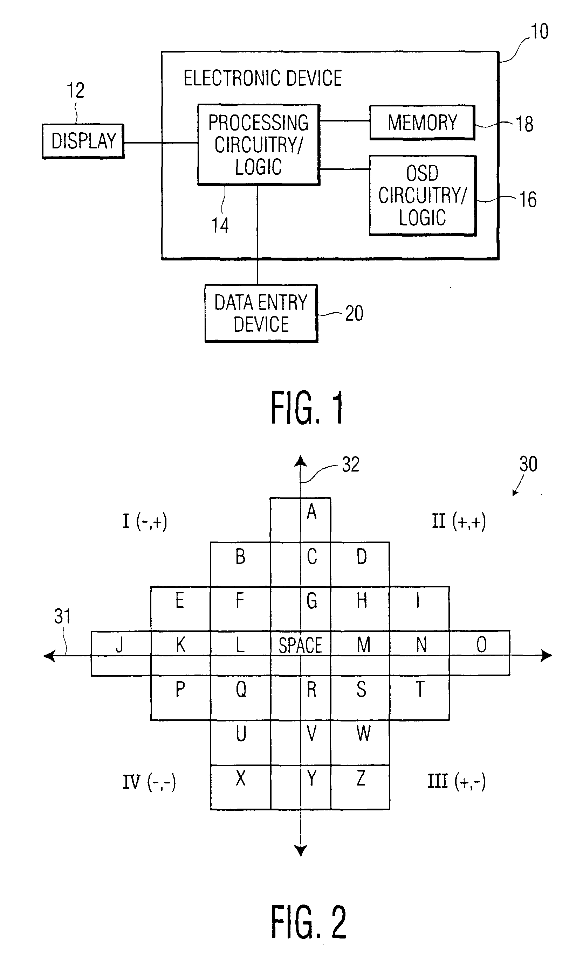

With reference to Fig. 1, there is shown a block representation of a generic electronic device, generally designated 10, that may be used to carry out the principles of the present invention. The electronic device 10 is typically used in conjunction with a display 12 that may be integral with the electronic device 10 or may be external to the electronic device 10 and in communication therewith. It should be initially appreciated that the electronic device 10 is representative of any type of electronic device and particularly a consumer electronic device, such as a television, a DVD unit, a VHS unit, and/or the like.

The electronic device 10 includes processing circuitry/logic, generally designated 14, on-screen display (OSD) circuitry/logic, generally designated 16, and memory 18. A data entry device 20 is also provided that may or may not be integral with the electronic device 10. The data entry device 20 may include a portion external to the electronic device 10 such as a remote or keyboard with the electronic device 10 having an internal module or interface. As an example, with a remote as a data entry device, the remote may have buttons or keys that allow for movement of a cursor, highlighter, or the like on the display 12 with signals generated by and emanating from the remote in response to the selection of keys by the user received by a complementary sensor or receiver in the electronic device 10. In the case of a keyboard as the data entry device 20, the electronic device 10 would have an interface for receiving a plug or connector for the keyboard and an appropriate interface for interpreting the signals generated by the keyboard in response to the selection of keys by the user. In accordance with one aspect of the present invention, the data entry device controls selection of keys shown on the display 12. Other components and/or circuitry typically forming a part of the electronic device 10 and/or particular to the type of electronic device are not shown.

It should be appreciated that the connections shown between the various components of the electronic device 10 are only exemplary, as is the separation or discrete depiction of the various components. The separation of components is only for illustration.

The memory 17 is operable to store instructions that are executable by the processing circuitry/logic unit 14. The instructions allow the electronic device 10 to function appropriately in accordance with known functionality and/or the functionality discussed herein. The OSD unit 16 is operable to provide the display of text, graphics, and/or the like on the display 12 such as a display of a representation of a data entry keyboard. The data entry device 20 is operable to allow user input of data which is used by the electronic device 10.

In one form, the data entry device 20 may be a keyboard having a plurality of keys or buttons each representing an alpha-numeric character and/or symbol or providing a function such as cursor control on a display, or a function in conjunction with the operation of the electronic device 10. Hereinafter, the term *character* includes alpha-numeric characters, symbols, and the like. In another form, the data entry device 20 may include a graphic representation of keyboard that is displayed on the display 12. The graphic keyboard may include a plurality of selectable keys of characters. The graphic or displayed keys may be selectable via a touch-screen, a movable cursor controlled by a remote or other device, or a movable highlight area controlled by a remote or other device.

It should be understood that the term *keyboard* includes physical or hardware keyboards, as both a stand-alone device or as integrated into an electronic device, and an on-screen display of a keyboard. Further, the term *keyboard* includes any data entry device having a plurality of keys, buttons and/or the like that may be selected or chosen through user interaction either physically (e.g. a touch-screen) or via an electronic medium (e.g. a controllable cursor or highlighter).

In Fig. 2, there is depicted one embodiment of a keyboard (i.e. a data entry device) configuration in accordance with the principles of the present invention generally designated 30. The keyboard configuration (hereinafter "configuration") 30 may be termed a "Basic English Roman Alphabet" configuration. Each key is labeled with a corresponding character of the basic English Roman alphabet and functions to allow the entering or inputting of that particular character into the electronic device 10 when selected. The keys are also arranged in alphabetical order. One key or button, here arbitrarily labeled SPACE, is centrally located amidst the remaining plurality of keys. It should be appreciated that any particular key may be the centrally located key. It is, however, appropriate to have a "neutral" key like the SPACE key be the central key.

The plurality of keys are arranged with regard to the central key. The configuration 30 is arranged such that the central key is an origin of an X-Y axis or coordinate system. Particularly, the configuration 30 is arranged to have a major X (horizontal) axis 31 and a major Y (vertical) axis 32. The configuration 30 may thus be broken down into the X-Y coordinate system with each key thereof represented by an X-Y axis (x, y) coordinate. The x value of the (x, y) coordinate is the abscissa while the y value of the (x, y) coordinate is the ordinate. The first quadrant (I) has coordinate values of (-, +), the second quadrant (II) has coordinate values of (+,+), the third quadrant (III) has coordinate values of (-, + ), while the fourth quadrant (IV) has coordinate values of (-,-). The values of the coordinates or keys of the configuration 30 are correlated to distances from the origin or central key.

In the first quadrant, x or the abscissa value or distance from the origin is negative while the y or ordinate value or distance from the origin is positive. In the second quadrant, x or the abscissa value or distance from the origin is positive while the y or ordinate value or distance from the origin is positive. In the third quadrant, x or the abscissa value or distance from the origin is positive while the y or ordinate value or distance from the origin is negative. In the fourth quadrant, x or the abscissa value or distance from the origin is negative, while the y or ordinate value or distance from the origin is negative.

In the configuration 30, the major X axis 31 has the same number of keys on both sides of the central key. The major Y axis 32 also has the same number of keys on both sides of the central key. The configuration 30 is also such that the total number of keys of the major X axis 31 is the same as the total number of keys of the major Y axis 32.

In particular, the keys along the positive portion of the X axis 31, here the "M", "N", and "O" keys, each have a positive, non-zero, abscissa value or distance relative to the origin but a zero ordinate value or distance relative to the origin; where "M" is (1,0), "N" is (2,0), and "O" is (3,0). These keys are spaced along the positive portion of the X axis 31 to a maximum positive abscissa value or distance relative to the origin (here the "0" key with a maximum positive value or distance of 3, but which depends on the number of such keys from the central key or origin) with the ordinate value or distance relative to the origin always remaining zero. The keys along the positive portion of the Y axis 32, here the "G", "C", and "A" keys, each have a positive, non-zero, ordinate value or distance relative to the origin but a zero abscissa value or distance relative to the origin, where "G" is (0,1), "C" is (0,2), and "A" is (0,3). These keys are spaced along the positive portion of the Y axis 32 to a maximum positive ordinate value or distance relative to the origin (here the "A" key with a maximum positive value or distance of 3, but which depends on the number of such keys from the central key or origin) with the abscissa value always remaining zero.

The keys along the negative portion of the X axis 31, here the "L", "K", and "J" keys, each have a negative, non-zero, abscissa value or distance relative to the origin but a zero ordinate value or distance relative to the origin, where "L" is (-1,0), "K" is (-2,0), and "J" is (-3,0). These keys are spaced along the negative portion of the X axis 31 to a maximum negative abscissa value or distance relative to the origin (where the maximum negative abscissa value or distance relative to the origin is defined as the maximum absolute value or distance relative to the origin of the negative abscissa value or distance relative to the origin), (here the "J" key with a maximum negative value or distance of 3, but which depends on the number of such keys relative to the central key or origin) with the ordinate value or distance relative to the origin always remaining zero. The keys along the negative portion of the Y axis 32, here the "R", "V", and "Y" keys, each have a negative, non-zero, ordinate value or distance relative to the origin but a zero abscissa value or distance relative to the origin, where "R" is (0,-1), "V" is (0,-2), and "Y" is (0,-3). These keys are spaced along the negative portion of the Y axis 32 to a maximum negative ordinate value or distance relative to the origin (where the maximum negative ordinate value or distance relative to the origin is defined as the maximum absolute value or distance relative to the origin of the negative ordinate value or distance relative to the origin), (here the "Y" key with a maximum negative value or distance of 3, but which depends on the number of such keys relative to the central key or origin) with the abscissa value or distance relative to the origin always remaining zero.

The keys of configuration 30 not on the X axis 31 or Y axis 32 each have an (x, y) or (abscissa, ordinate) coordinate value or distance relative to the origin both of which are non-zero in all cases. Each one of these keys is in one of the four quadrants (i.e. I, II, III, or IV). For example, in the first quadrant, the "F" key has a coordinate value or distance relative to the origin of (-1,1), the "B" key has a coordinate value or distance relative to the origin of (-1,2), and the "E" key has a coordinate value or distance relative to the origin of (-2, 1). In each case with regard to the first quadrant keys, no key has an abscissa value or distance relative to the origin that exceeds the maximum negative abscissa value or distance relative to the origin while at the same time no key has an ordinate value or distance relative to the origin that exceeds the maximum ordinate value or distance relative to the origin.

In the second quadrant, the "H" key has a coordinate value or distance relative to the origin of (1,1), the "D" key has a coordinate value or distance relative to the origin of (1,2), and the "I" key has a coordinate value or distance relative to the origin of (2,1). In each case with regard to the second quadrant keys, no key has an abscissa value or distance relative to the origin that exceed the maximum abscissa value or distance relative to the origin while at the same time no key has an ordinate value or distance relative to the origin that exceed the maximum ordinate value or distance relative to the origin.

In the third quadrant, the "S" key has a coordinate value or distance relative to the origin of (1,-1), the "T" key has a coordinate value or distance relative to the origin of (2,-1 ), the "W" key has a coordinate value or distance relative to the origin of (1,-2), and the "Z" key has a coordinate value or distance relative to the origin of (1,-3). In each case with regard to the third quadrant keys, no key has an abscissa value or distance relative to the origin that exceeds the maximum abscissa value or distance relative to the origin while at the same time no key has an ordinate value or distance relative to the origin that exceeds the maximum negative ordinate value or distance relative to the origin.

In the fourth quadrant, the "Q" key has a coordinate value or distance relative to the origin of (-1,-1), the "P" key has a coordinate value or distance relative to the origin of (-2,-1), the "U" key has a coordinate value or distance relative to the origin of (-1,-2), and the "X" key has a coordinate value or distance relative to the origin of (-1,-3). In each case with regard to the fourth quadrant keys, no key has an (absolute) abscissa value or distance relative to the origin that exceeds the maximum negative abscissa value or distance relative to the origin while at the same time no key has an (absolute) ordinate value or distance relative to the origin that exceeds the maximum negative ordinate value or distance relative to the origin.

In summation, the configuration 30 provides for a minimum distance for at least a majority of keys of the plurality of keys, relative to the central key particularly when the central key is referenced after selection of a particular key. In addition, the configuration 30 provides for a maximum distance of any key of the arrangement from the origin, or center key, to be no more than the distance from the origin of one of the maximum abscissa value, minimum abscissa value, maximum ordinate value, and minimum ordinate value for coordinates of keys included in the arrangement. Distance from the origin in this regard may be defined as the square root of the sum of the squares of the x and y coordinates for a particular key (i.e., (x² + y²)^{1/2}). Thus, for example, if activation of a particular key in a displayed representation of a keyboard is accomplished by moving a cursor to the desired key and then selecting the key, and if each selection of a key is followed by a return of the cursor to the origin or center key, then each subsequent selection of any key will involve moving the cursor no more than the above-described maximum distance from the origin.

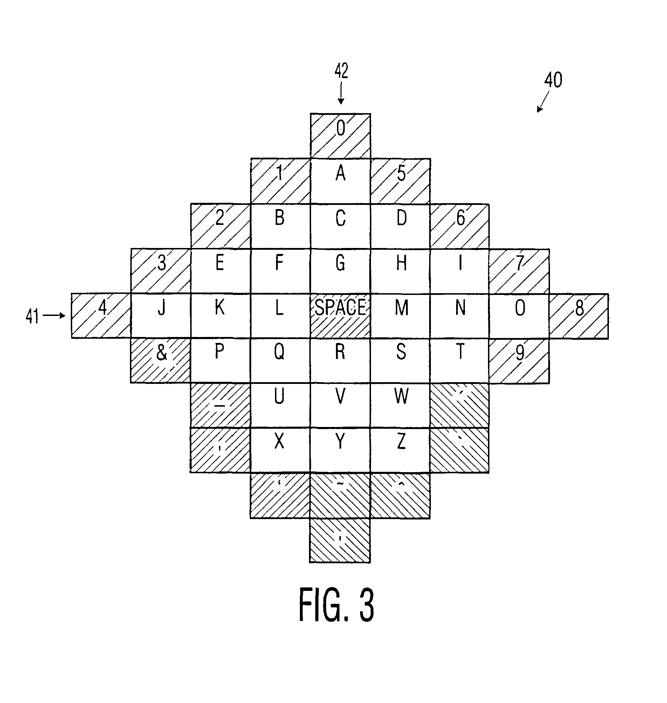

In Fig. 3, there is depicted a second embodiment of a keyboard (i.e. a data entry device) configuration in accordance with the principles of the present invention generally designated 40. The keyboard configuration (hereinafter "configuration") 40 may be termed an "Advanced North American Roman Alphabet" configuration. Each key is labeled with a corresponding character of the North American Roman Alphabet with the addition of numbers and various symbols and functions to allow the entering or inputting of that particular character into the electronic device 10 when selected. The alphabet keys are also arranged in alphabetical order. One key or button, here arbitrarily labeled SPACE, is centrally located amidst the remaining plurality of keys. It should be appreciated that any particular key may be the centrally located key. It is, however, appropriate to have a "neutral" key like the SPACE key be the central key. As well, the same X-Y coordinate system as described above with reference to Fig. 2 is applicable to the configuration 40 of Fig. 3.

In this regard, the configuration 40 includes an X (horizontal) axis 41 and a Y (vertical) axis 42. The various keys also have coordinate values or distances relative to the origin in like manner to that described with reference to Fig. 2. However, with the configuration 40, the maximum positive abscissa value or distance relative to the origin is 4, the maximum negative abscissa value or distance relative to the origin is 4, the maximum positive ordinate value or distance relative to the origin is 4, and the maximum negative ordinate value or distance relative to the origin is 5. Further, with the configuration 40, all coordinates or distances from the origin of all the quadrant keys are less than the various maximum values or distances relative to the origin (positive and negative, ordinate and abscissa).

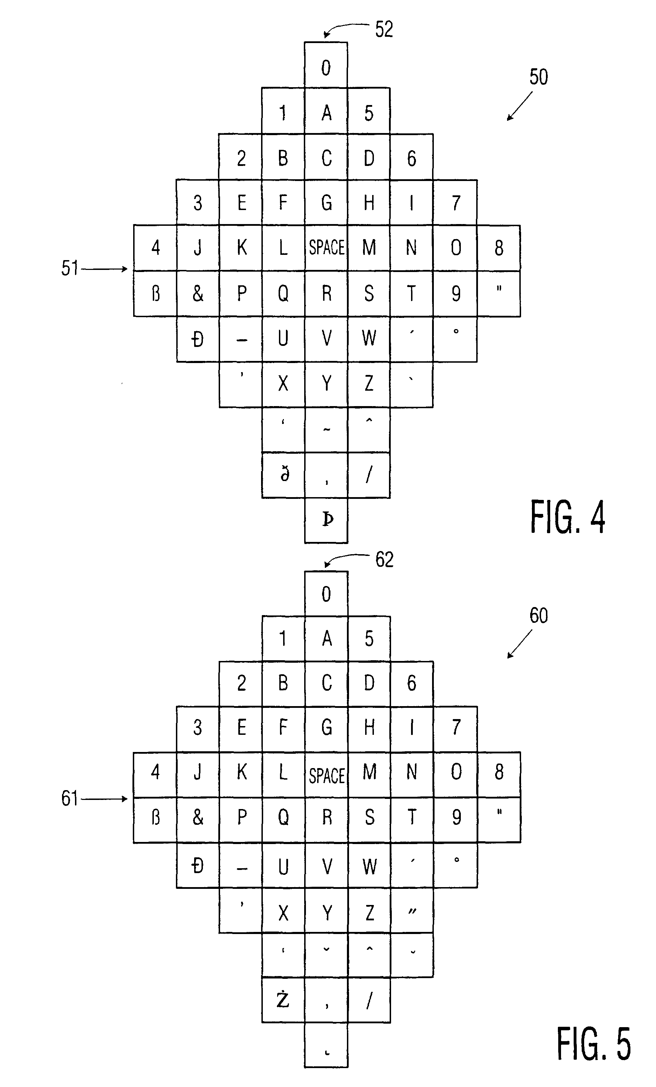

In Fig. 4, there is depicted a third embodiment of a keyboard configuration generally designated 50. The keyboard configuration 50 may be termed "Advanced European Roman Alphabet" configuration. Each key is labeled with a corresponding character of the European Roman Alphabet with the addition of numbers and various symbols and functions to allow the entering or inputting of that particular character into the electronic device 10 when selected. The alphabet keys are also arranged in alphabetical order. One key or button, here arbitrarily labeled SPACE, is centrally located amidst the remaining plurality of keys. It should be appreciated that any particular key may be the centrally located key. It is, however, appropriate to have a "neutral" key like the SPACE key be the central key. As well, the same X-Y coordinate system as described above with reference to Fig. 2 is applicable to the configuration 50 of Fig. 4.

In this regard, the configuration 50 includes an X (horizontal) axis 51 and a Y (vertical) axis 52. The various keys also have coordinate values or distances relative to the origin in like manner to that described with reference to Fig. 2. However, with the configuration 50, the maximum positive abscissa value or distance relative to the origin is 4, the maximum negative abscissa value or distance relative to the origin is 4, the maximum positive ordinate value or distance relative to the origin is 4, and the maximum negative ordinate value or distance relative to the origin is 6. Further, with the configuration 50, all coordinates or distances from the origin of all the quadrant keys are equal to or less than (do not exceed) the various maximum values or distances from the origin (positive and negative, ordinate and abscissa).

In Fig. 5, there is depicted a fourth embodiment of a keyboard configuration generally designated 60. The keyboard configuration 60 may be termed "Advanced Central European Roman Alphabet" configuration. Each key is labeled with a corresponding character of the Central European Roman Alphabet with the addition of numbers and various symbols and functions to allow the entering or inputting of that particular character into the electronic device 10 when selected. The alphabet keys are also arranged in alphabetical order. One key or button, here arbitrarily labeled SPACE, is centrally located amidst the remaining plurality of keys. It should be appreciated that any particular key may be the centrally located key. It is, however, appropriate to have a "neutral" key like the SPACE key be the central key. As well, the same X-Y coordinate system as described above with reference to Fig. 2 is applicable to the configuration 60 of Fig. 5.

In this regard, the configuration 60 includes an X (horizontal) axis 61 and a Y (vertical) axis 62. The various keys also have coordinate values or distances relative to the origin in like manner to that described with reference to Fig. 2. However, with the configuration 60, the maximum positive abscissa value or distance relative to the origin is 4, the maximum negative abscissa value or distance relative to the origin is 4, the maximum positive ordinate value or distance relative to the origin is 4, and the maximum negative ordinate value or distance relative to the origin is 6. Further, with the configuration 60, all coordinates or distances from the origin of all quadrant keys are equal to or less than (do not exceed) the various maximum values or distances relative to the origin (positive and negative, ordinate and abscissa).

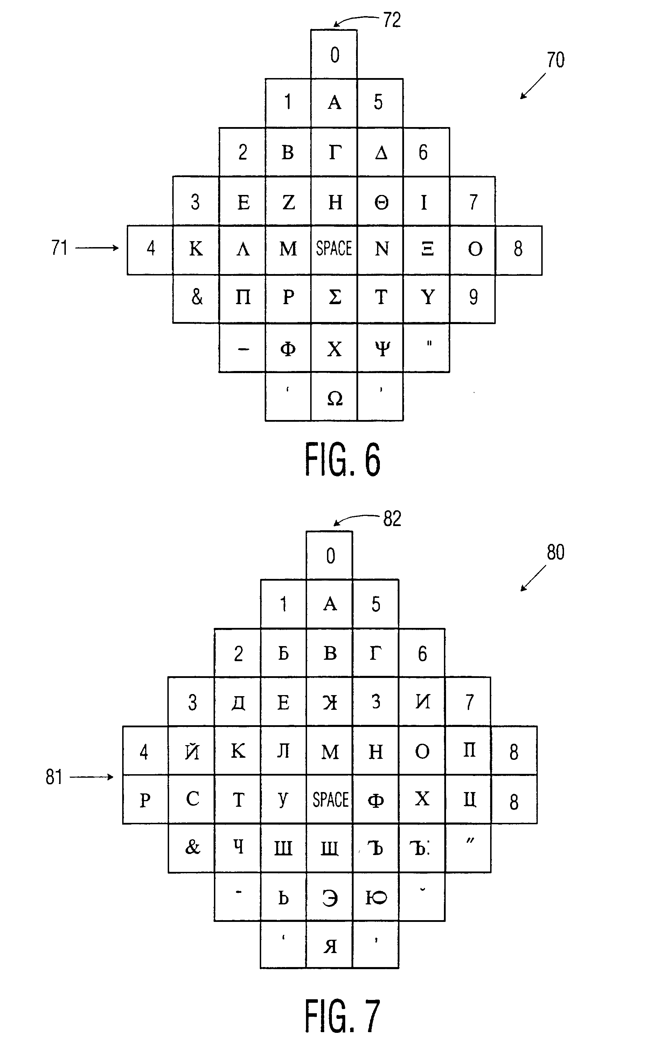

In Fig. 6, there is depicted a fifth embodiment of a keyboard configuration generally designated 70. The keyboard configuration 70 may be termed "Advanced Greek Alphabet" configuration. Each key is labeled with a corresponding character of the Greek Alphabet with the addition of numbers and various symbols and functions to allow the entering or inputting of that particular character into the electronic device 10 when selected. The alphabet keys are also arranged in alphabetical order. One key or button, here arbitrarily labeled SPACE, is centrally located amidst the remaining plurality of keys. It should be appreciated that any particular key may be the centrally located key. It is, however, appropriate to have a "neutral" key like the SPACE key be the central key. As well, the same X-Y coordinate system as described above with reference to Fig. 2 is applicable to the configuration 70 of Fig. 6.

In this regard, the configuration 70 includes an X (horizontal) axis 71 and a Y (vertical) axis 72. The various keys also have coordinate values or distances relative to the origin in like manner to that described with reference to Fig. 2. However, with the configuration 70, the maximum positive abscissa value or distance relative to the origin is 4, the maximum negative abscissa value or distance relative to the origin is 4, the maximum positive ordinate value or distance relative to the origin is 4, and the maximum negative ordinate value or distance relative to the origin is 3. Further, with the configuration 70, all coordinates or distances from the origin of all the quadrant keys are equal to or less than (do not exceed) the various maximum values or distances relative to the origin (positive and negative, ordinate and abscissa).

In Fig. 7, there is depicted a sixth embodiment of a keyboard configuration generally designated 80. The keyboard configuration 80 may be termed "Advanced Cyrillic Alphabet" configuration. Each key is labeled with a corresponding character of the Cyrillic Alphabet with the addition of numbers and symbols and functions to allow the entering or inputting of that particular character into the electronic device 10 when selected. The keys alphabet are also arranged in alphabetical order. One key or button, here arbitrarily labeled SPACE, is centrally located amidst the remaining plurality of keys. It should be appreciated that any particular key may be the centrally located key. It is, however, appropriate to have a "neutral" key like the SPACE key be the central key. As well, the same X-Y coordinate system as described above with reference to Fig. 2 is applicable to the configuration 80 of Fig. 7.

In this regard, the configuration 80 includes an X (horizontal) axis 81 and a Y (vertical) axis 82. The various keys also have coordinate values or distances relative to the origin in like manner to that described with reference to Fig. 2. However, with the configuration 80, the maximum positive abscissa value or distance relative to the origin is 4, the maximum negative abscissa value or distance relative to the origin is 4, the maximum positive ordinate value or distance relative to the origin is 5, and the maximum negative ordinate value or distance relative to the origin is 3. Further, with the configuration 80, all coordinates or distances relative to the origin of all the quadrant keys are equal to or less than (do not exceed) the various maximum values or distances relative to the origin (positive and negative, ordinate and abscissa).

It should be appreciated that the maximum positive and/or negative abscissa values and ordinate values may vary, depending on the particular layout. The configurations of Figs. 2-7 are thus exemplary of the alphabets that can be utilized and the various configurations for the keyboard.

In accordance with an aspect of the present invention, the centrally located key (i.e. the SPACE key) is a reference key or starting point. When the keyboard configuration is displayed on the display 12, data entry is accomplished by moving a cursor or highlighted area onto a desired key and making the selection. The electronic device 10 is operable to accept data entry from the data entry device. In the case of a physical keyboard, a user's finger presses or selects the appropriate key. In the case of a displayed keyboard, a remote may be used to position a cursor or highlighted area on the desired key prior to selection.

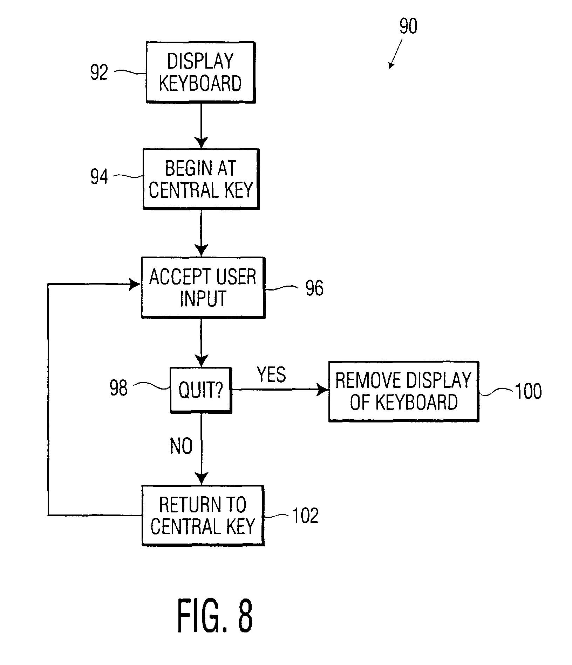

Next, a flowchart, generally designated 90, depicted in Fig. 8 is referenced to describe a method of data entry in accordance with the principles presented herein. The instructions for the present method are stored in the memory 18 of the electronic device 10 and executed by the processing circuitry/logic unit 14. It should be appreciated that the flowchart 90 and the method described herein in association with the flowchart 90 is only exemplary of a method to carry out the principles presented herein.

The software routines (i.e. instructions) may be implemented by any means as is known in the art, and in any programming language. Various programming approaches such as procedural, object oriented, or artificial intelligence techniques may be employed.

The steps of the flowchart 90 may be implemented by one or more software routines, processes, subroutines, modules, etc. It should be appreciated that the flowchart 90 is illustrative of merely a broad logical flow of a method in accordance with the principles of the present invention and that steps may be added to, or taken away from, the flowchart 90 without departing from the scope of the present invention. Further, the order of execution of steps in the flowchart 90 may be changed without departing from the scope of the present invention. Additional considerations in implementing the method described by the flowchart 90 in software may dictate changes in the selection and order of steps. Some considerations are event handling by interrupt driven, polled, or other schemes. A multiprocessing or multitasking environment could allow steps to be executed essentially concurrently.

When it is necessary, a keyboard configuration such as one of the configurations shown and described herein is caused to be shown on the display 12, block 92. Once the appropriate configuration is displayed, a cursor is automatically positioned at the central key, block 94. Alternatively to providing the cursor at the central key, the central key is highlighted. The user then begins to enter data by moving the cursor or highlighted area (herein collectively "cursor") to a particular key, block 96. Upon validating the selection by pressing "enter" or a similar key, the electronic device 10 accepts the data input then, sees if the user quits, block 98. If the user selects Quit, display of the keyboard is stopped, block 100, else the cursor is returned to the central key, block 102, to wait for the input of another key, block 96.

Thus, each time a key is selected, the cursor returns to the central key and the user may then navigate to the next key. Since the keys are configured in the manner shown and described herein, no key is substantially any further, requires more keystrokes (in the case of the use of "arrow" keys on a remote) or movement of a mouse or mouse-like structure, than any other key.

As an example and with reference to Fig. 3, when the configuration 40 is shown on the display 12, the central key (i.e. SPACE) is highlighted. Assuming a remote is used and includes arrow navigation keys with one keystroke per horizontal or vertical movement, the user proceeds to choose the appropriate key by utilizing the navigation keys to navigate to the desired key (character/symbol). If a name such as "John" is being entered, the user will press the left arrow key three times to land the highlighted area on the "J" and press enter or select. The highlighted area jumps back to the central key (i.e. SPACE). Next, the user presses the right arrow key three times to land the highlight on the "O" key and selects enter. Next, the user presses either an up and right arrow key sequence or a right and up arrow key sequence to place the highlight on the letter "H" and presses enter. The highlighted area then jumps back to the central key (i.e. SPACE). The user then presses the right arrow key twice and selects enter to choose the "N" key that has been highlighted. The highlighted area then jumps back to the central key. The user has made only ten keystrokes (not counting the enter or validation keystrokes).

If the highlight had remained on the letter previously selected such that the user would have to navigate the highlighted area from the previous letter to the next letter, there would have been a total of fourteen keystrokes (not counting the enter or validation keystrokes). The user thus enters only a minimal number of keystrokes to enter the name "John" in accordance with the principles of the present invention.

While this invention has been described as having a preferred design and/or configuration, the present invention can be further modified within the scope of this disclosure. Further, this application is intended to cover such departures from the present disclosure as come within known or customary practice in the art to which this invention pertains and which fall within the limits of the appended claims.

## Claims

1. A data entry device (20) comprising:
a body, and
a plurality of selectable keys retained by said body and correlated to an X-Y coordinate system, each of said plurality of keys having particular integer X and Y coordinate values within said coordinate system, one of said plurality of keys defining a maximum positive integer ordinate value, a second one of said plurality of keys defining a maximum negative integer ordinate value, a third one of said plurality of keys defining a maximum positive integer abscissa value, and a fourth one of said plurality of keys defining a maximum negative integer abscissa value, wherein each key of the remainder of said keys has X and Y integer coordinate values associated with a distance from an origin of the X-Y coordinate system that is less than or equal to one of said maximum positive integer ordinate value, said maximum negative integer ordinate value, said maximum positive integer abscissa value and said maximum negative integer abscissa value.

2. The data entry device of claim 1, wherein said plurality of keys form an alphabet (A - Z).

3. The data entry device of claim 2, wherein said plurality of keys are arranged in alphabetical order.

4. The data entry device of claim 1, wherein said plurality of keys form an alpha-numeric data entry system (A - Z, 0 - 9).

5. The data entry device of claim 4, wherein a portion of said plurality of keys form an alphabet in alphabetical order (A - Z).

6. A method of data entry comprising:
displaying a keyboard on a display, the keyboard showing a plurality of keys wherein one of said plurality of keys is a reference key located at an origin of an X-Y coordinate system and a first remainder of said plurality of keys are correlated to the X-Y coordinate system, each of said first remainder of said plurality of keys having a particular integer coordinate value within the X-Y coordinate system,
one of said first remainder of said plurality of keys defining a maximum positive integer ordinate value,
a second one of said first remainder of said plurality of keys defining a maximum negative integer ordinate value,
a third one of said first remainder of said plurality of keys defining a maximum integer positive abscissa value, and
a fourth one of said first remainder of said plurality of keys defining a maximum negative integer abscissa value,
wherein each key of a second remainder of said plurality of keys has an integer coordinate value that is less than or equal to said maximum positive ordinate value, said maximum negative ordinate value, said maximum positive abscissa value, and said maximum negative abscissa value;
(b) beginning user selection of keys at said reference key;
(c) allowing user selection of any one of said plurality of keys via an input device;
(d) returning to said reference key after user selection of any one of said plurality of keys; and
(e) repeating (c) and (d) until an end of user selection.

7. The method of data entry of claim 6, wherein allowing user selection of any one of said plurality of keys includes navigating to any one of said plurality of keys via an input device includes utilizing a remote.

8. The method of data entry of claim 6, wherein beginning user selection of keys at said reference key includes highlighting said reference key.

9. The method of data entry of claim 6, wherein beginning user selection of keys at said reference key includes positioning a cursor on said reference key.

10. The method of data entry of claim 6, wherein said plurality of keys form an alphabet (A - Z).

11. The method of data entry of claim 10, wherein said plurality of keys are arranged in alphabetical order.

12. The method of data entry of claim 6, wherein said plurality of keys form an alpha-numeric data entry system (A - Z, 0 - 9).

## Patentansprüche

1. Dateneingabeeinrichtung (20), umfassend:
einen Hauptteil und
mehrere wählbare Tasten, die durch den Hauptteil gehalten und mit einem X-Y-Koordinatensystem korreliert sind, wobei jede der mehreren Tasten bestimmte ganzzahlige X- und Y-Koordinatenwerte in dem Koordinatensystem aufweist, wobei eine der mehreren Tasten einen maximalen positiven ganzzahligen Ordinatenwert, eine zweite der mehreren Tasten einen maximalen negativen ganzzahligen Ordinatenwert, eine dritte der mehreren Tasten einen maximalen positiven ganzzahligen Abszissenwert und eine vierte der mehreren Tasten einen maximalen negativen ganzzahligen Abszissenwert definiert, wobei jede Taste des Rests der Tasten ganzzahlige X- und Y-Koordinatenwerte aufweist, die einem Abstand von einem Ursprung des X-Y-Koordinatensystems zugeordnet sind, der kleiner oder gleich dem maximalen positiven ganzzahligen Ordinatenwert, dem maximalen negativen ganzzahligen Ordinatenwert, dem maximalen positiven ganzzahligen Abszissenwert oder dem maximalen negativen ganzzahligen Abszissenwert ist.

2. Dateneingabeeinrichtung nach Anspruch 1, wobei die mehreren Tasten ein Alphabet (A - Z) bilden.

3. Dateneingabeeinrichtung nach Anspruch 2, wobei die mehreren Tasten in alphabetischer Reihenfolge angeordnet sind.

4. Dateneingabeeinrichtung nach Anspruch 1, wobei die mehreren Tasten ein alphanumerisches Dateneingabesystem (A - Z, 0 - 9) bilden.

5. Dateneingabeeinrichtung nach Anspruch 4, wobei ein Teil der mehreren Tasten ein Alphabet in alphabetischer Reihenfolge (A - Z) bildet.

6. Verfahren zur Dateneingabe mit den folgenden Schritten:
Anzeigen einer Tastatur auf einer Anzeige, wobei die Tastatur mehrere Tasten zeigt, wobei eine der mehreren Tasten eine Bezugstaste ist, die sich an einem Ursprung eines X-Y-Koordinatensystems befindet, und ein erster Rest der mehreren Tasten mit dem X-Y-Koordinatensystem korreliert ist,
wobei jede des ersten Rests der mehreren Tasten einen bestimmten ganzzahligen Koordinatenwert in dem X-Y-Koordinatensystem aufweist,
wobei eine des ersten Rests der mehreren Tasten einen maximalen positiven ganzzahligen Ordinatenwert definiert,
eine zweite des ersten Rests der mehreren Tasten einen maximalen negativen ganzzahligen Ordinatenwert definiert,
eine dritte des ersten Rests der mehreren Tasten einen maximalen positiven ganzzahligen Abszissenwert definiert, und
eine vierte des ersten Rests der mehreren Tasten einen maximalen negativen ganzzahligen Abszissenwert definiert,
wobei jede Taste eines zweiten Rests der mehreren Tasten einen ganzzahligen Koordinatenwert aufweist, der kleiner oder gleich dem maximalen positiven Ordinatenwert, dem maximalen negativen Ordinatenwert, dem maximalen positiven Abszissenwert und dem maximalen negativen Abszissenwert ist;
(b) Beginnen der Benutzerauswahl von Tasten an der Bezugstaste;
(c) Ermöglichen einer Benutzerauswahl einer beliebigen der mehreren Tasten über eine Eingabeeinrichtung;
(d) Zurückkehren zu der Bezugstaste nach der Benutzerauswahl einer beliebigen der mehreren Tasten; und
(e) Wiederholen von (c) und (d) bis zu einem Ende der Benutzerauswahl.

7. Verfahren zur Dateneingabe nach Anspruch 6, wobei das Ermöglichen der Benutzerauswahl einer beliebigen der mehreren Tasten, einschließlich Navigation zu einer beliebigen der mehreren Tasten über eine Eingabeeinrichtung, das Verwenden einer Fernbedienung umfaßt.

8. Verfahren zur Dateneingabe nach Anspruch 6, wobei das Beginnen der Benutzerauswahl von Tasten an der Bezugstaste das Hervorheben der Bezugstaste umfaßt.

9. Verfahren zur Dateneingabe nach Anspruch 6, wobei das Beginnen der Benutzerauswahl von Tasten an der Bezugstaste das Positionieren eines Cursors an der Bezugstaste umfaßt.

10. Verfahren zur Dateneingabe nach Anspruch 6, wobei die mehreren Tasten ein Alphabet (A - Z) bilden.

11. Verfahren zur Dateneingabe nach Anspruch 10, wobei die mehreren Tasten in alphabetischer Reihenfolge angeordnet sind.

12. Verfahren zur Dateneingabe nach Anspruch 6, wobei die mehreren Tasten ein alphanumerisches Dateneingabesystem (A - Z, 0 - 9) bilden.

## Revendications

1. Un dispositif d'entrée de données (20) comprenant :
un corps, et
une pluralité de touches sélectionnables par ledit corps et mises en correspondance avec un système de coordonnées X-Y, chacune de ladite pluralité de touches possédant des valeurs de coordonnées X et Y entières spécifiques au sein du système de coordonnées, une touche de ladite pluralité de touches définissant une valeur d'ordonnée entière positive maximale, une seconde touche de ladite pluralité de touches définissant une valeur d'ordonnée entière négative maximale, une troisième touche de ladite pluralité de touches définissant une valeur d'abscisse entière positive maximale et une quatrième touche de ladite pluralité de touches définissant une valeur d'abscisse entière négative maximale, où chaque touche desdites touches restantes possède des valeurs de coordonnées entières X et Y associées à une distance par rapport à l'origine du système de coordonnées X-Y qui est inférieure ou égale à l'une de ladite valeur d'ordonnée entière positive maximale, ladite valeur d'ordonnée entière négative maximale, ladite valeur d'abscisse entière positive maximale et ladite valeur d'abscisse entière négative maximale.

2. Le dispositif d'entrée de données de la revendication 1, dans lequel ladite pluralité de touches forme un alphabet (A-Z).

3. Le dispositif d'entrée de données de la revendication 2, dans lequel ladite pluralité de touches est agencée par ordre alphabétique.

4. Le dispositif d'entrée de données de la revendication 1, dans lequel ladite pluralité de touches forme un système d'entrée de données alphanumériques (A-Z, 0-9).

5. Le dispositif d'entrée de données de la revendication 4, dans lequel une partie de ladite pluralité de touches forme un alphabet présenté par ordre alphabétique (A-Z).

6. Un procédé d'entrée de données comprenant :
(a) l'affichage d'un clavier sur un affichage, le clavier présentant une pluralité de touches où une touche de ladite pluralité de touches est une touche de référence située à une origine d'un système de coordonnées X-Y et un premier groupe restant de ladite pluralité de touches est associée au système de coordonnées X-Y, chaque touche dudit premier groupe de ladite pluralité de touches possédant une valeur de coordonnée entière spécifique dans le système de coordonnées X-Y.
une touche dudit premier groupe de ladite pluralité de touches définissant une valeur d'ordonnée entière positive maximale,
une deuxième touche dudit premier groupe de ladite pluralité de touches définissant une valeur d'ordonnée entière négative maximale,
une troisième touche dudit premier groupe de ladite pluralité de touches définissant une valeur d'abscisse entière positive maximale,
une quatrième touche dudit premier groupe de ladite pluralité de touches définissant une valeur d'abscisse entière négative maximale,
où chaque touche d'un deuxième groupe de ladite pluralité de touches possède une valeur de coordonnée entière qui est inférieure ou égale à ladite valeur d'ordonnée positive maximale, à ladite valeur d'ordonnée négative maximale, à ladite valeur d'abscisse positive maximale et à ladite valeur d'abscisse négative maximale ;
(b) l'initialisation de la sélection utilisateur de touches à partir de ladite touche de référence ;
(c) l'autorisation de la sélection utilisateur de l'une de ladite pluralité de touches au moyen d'un dispositif d'entrée ;
(d) le retour à ladite touche de référence après la sélection utilisateur de l'une de ladite pluralité de touches ; et
(e) la répétition des étapes (c) et (d) jusqu'à la fin d'une sélection utilisateur.

7. Le procédé d'entrée de données de la revendication 6, dans lequel l'autorisation de la sélection utilisateur d'une touche de la pluralité de touches comprend la navigation jusqu'à l'une des touches de ladite pluralité de touches au moyen d'un dispositif d'entrée incluant l'utilisation d'une télécommande.

8. Le procédé d'entrée de données de la revendication 6, dans lequel l'initialisation de la sélection utilisateur des touches à partir de ladite touche de référence comprend la mise en surbrillance de ladite touche de référence.

9. Le procédé d'entrée de données de la revendication 6, dans lequel l'initialisation de la sélection utilisateur des touches à partir de ladite touche de référence comprend le positionnement d'un curseur sur ladite touche de référence.

10. Le procédé d'entrée de données de la revendication 6, dans lequel ladite pluralité de touches forme un alphabet (A-Z).

11. Le procédé d'entrée de données de la revendication 10, dans lequel ladite pluralité de touches est agencée par ordre alphabétique.

12. Le procédé d'entrée de données de la revendication 6, dans lequel ladite pluralité de touches forme un système d'entrée de données alphanumériques (A-Z, 0-9).
